# EUROPEAN PATENT SPECIFICATION

(11) **EP 3 082 310 B1**
(45) Date of publication and mention of the grant of the patent: **25.07.2018**
(21) Application number: 15178857.7
(22) Date of filing: 29.07.2015
(51) Int. Cl.: H04L 25/02, H02M 7/538

(54) **DRIVING MODULE AND DRIVING METHOD**
ANTRIEBSMODUL UND ANTRIEBSVERFAHREN
MODULE D'ENTRAÎNEMENT ET PROCÉDÉ D'ENTRAÎNEMENT

(30) Priority: 14.04.2015 US 201514685608
(43) Date of publication of application: 19.10.2016
(73) Proprietor: MediaTek Inc., Hsin-Chu 300 (TW)
(72) Inventor: Hou, Chun-Chih, 714 Yujing Dist., Tainan City (TW)
(74) Representative: Hoefer & Partner Patentanwälte mbB

(56) References cited:
- EP-A2- 0 763 917
- US-A- 3 040 271
- US-A- 3 111 632
- US-A- 3 539 902
- US-A- 5 077 652
- WESTRA JAN R ET AL: "8.5 A sub-1.75W full-duplex 10GBASE-T transceiver in 40nm CMOS", IEEE INTERNATIONAL SOLID STATE CIRCUITS CONFERENCE, IEEE SERVICE CENTER, NEW YORK, NY, US, 9 February 2014 (2014-02-09), pages 146-147, XP032575129, ISSN: 0193-6530, DOI: 10.1109/ISSCC.2014.6757375 ISBN: 978-1-4799-0918-6 [retrieved on 2014-03-05]

## Description

The present application relates to a driving module and a driving method, and particularly relates to a driving module and a driving method which has a low noise, a higher reliability and can meet different requirements according to the precharacterizing clauses of claims 1 and 8.

Document EP 0 763 917 A2 discloses a data transmitter including an integrated circuit having a control circuitry and two output buffers. The output buffers are connected to bondpads, respectively, which provide the output signals to the input terminals of a center-tapped transformer. The output terminals of the transformer are coupled to a twisted-pair cable. Each of the output buffers comprises an input node and is driven by data signals applied on the corresponding input node. Such a data signal on an input node of each of the output buffers may transit from 0 Volts to a predetermined voltage value VDD. Each of the output buffers provides a constant impedance voltage source, which may be regarded as a voltage source and an output resistor. The output buffers drive the bondpads complementary to one another to obtain a full differential swing about zero volts.

Document US 3,040,271 A discloses a power supply system comprising a converter circuit including a transistor oscillator energized from a direct voltage source or a battery. The power supply system further comprises a transformer including a primary winding connected to an oscillator output circuit and a feedback winding connected an oscillator feedback circuit for sustaining oscillations. The transistor oscillator comprises a pair of transistors connected in a common emitter configuration with the transformer. The pair of transistors comprises a first and a second transistor. The oscillator is supplied from the battery which has its negative terminal connected to a point of reference potential or ground. In the oscillator output circuit, the emitter electrodes of the transistors are connected together and through a conductor to the positive terminal of the battery. The primary winding has a center tap connected to ground. The collector electrode of the first transistor is connected through an upper half of the primary winding and through the center tap to ground and the collector electrode of the second transistor is connected through a lower half of the primary winding and the center tap to ground. In the oscillator feedback circuit, the feedback winding has a center tap connected through a conductor, a current limiting resistor and a starting resistor connected to the emitter electrodes of the transistors. The base electrode of the first transistor is connected through a lower half of the feedback winding to the center tap and the base electrode of the second transistor is connected through an upper half of the feedback winding to the center tap.

Document US 5,077,652 A discloses a DC-to-DC voltage booster including a pair of parallel connected FET banks. The conductivity of the FET banks is controlled by drivers that are connected to and responsive to a pulse width modulation signal. When gated on by the drivers, the FET banks pass current from an input power source through primary windings of a center-tapped transformer. The center tap is connected to ground or a negative side of the input power source. The FET banks comprise two parallel symmetrical banks of six MOSFETs arranged in a common drain, push-pull configuration. The common drain configuration allows a direct connection of the drain terminals of the FETs comprised by the FET banks to the positive side of the input power source. Each gate of the FETs comprised by the FET banks is driven by one of the drivers in response to the pulse width modulation signal, producing a pulsed current signal that is alternately applied at opposite ends of the primary windings.

Conventionally, a driving module is applied to an electronic apparatus for providing a desired driving voltage, wherein the electronic apparatus needs different operating modes because it may follow different standards, drive different length cable, or other possible reasons. However, if the driving module is applied to electronic apparatuses following different operating modes but the driving voltage is fixed, the power is wasted if the electronic apparatus needs a signal amplitude lower than the driving voltage, and the electronic apparatus may not smoothly operate if the electronic apparatus needs a signal amplitude higher than the driving voltage.

Therefore, a new driving module and a new driving method are needed to solve above-mentioned issues.

One objective of the present application is to provide a driving module, which can reduce noise, can increase reliability and can generate output voltages for different requirements.

Another objective of the present application is to provide a driving method, which can reduce noise, can increase reliability and can generate output voltages for different requirements.

One embodiment of the present application provides a driving module, which comprises: a transformer and at least one driver. The transformer comprises: a primary side, comprising a first input terminal, a second input terminal, and a center terminal coupled to a first predetermined voltage, wherein the primary side is center tapped at the center terminal; a secondary side. The driver is coupled to a second predetermined voltage, configured to receive at least one input signal, to provide a first input current flowing from the first input terminal to the center terminal, and to provide a second input current flowing from the second input terminal to the center terminal. The primary side generates an input voltage based on the first input current and the second input current, wherein the secondary side generates an output voltage based on the input voltage. The second predetermined voltage is higher than the first predetermined voltage. The driving module further comprises a DC to DC voltage converting circuit which is coupled between the second predetermined voltage and the driver and is configured to convert the second predetermined voltage into a required converted voltage for generating a required voltage amplitude swing of the output voltage. The DC to DC voltage converting circuit can convert the second predetermined voltage into different converted voltages for generating different voltage amplitude swings of the output voltage, respectively. The required converted voltage is one of the different converted voltages.

Another embodiment of the present application provides a driving method, which is applied to a driving module comprising a transformer with a primary side and a secondary side. The primary side comprises a first input terminal, a second input terminal, and a center terminal coupled to a first predetermined voltage. The primary side is center tapped at the center terminal. The driving method comprises: providing a first input current flowing from the first input terminal to the center terminal based on a second predetermined voltage; providing a second input current flowing from the second input terminal to the center terminal based on the second predetermined voltage, wherein the second predetermined voltage is higher than the first predetermined voltage; applying the primary side to generate an input voltage based on the first input current and the second input current; and applying the secondary side to generate an output voltage based on the input voltage. The driving method further comprises: converting, by a DC to DC voltage converting circuit, the second predetermined voltage into a required converted voltage for generating a required voltage amplitude swing of the output voltage. The DC-to-DC voltage converting circuit can convert the second predetermined voltage into different converted voltages for generating different voltage amplitude swings of the output voltage, respectively. The required converted voltage is one of the different converted voltages.

An example of related art, which is not an embodiment of the present invention, but which is useful for understanding the present application provides a transformer, which comprises: a primary side, comprising a first input terminal configured to receive a first input current, a second input terminal configured to receive a second input current, and a center terminal coupled to a first predetermined voltage; wherein the first input current and the second input current are generated according to a second predetermined voltage higher than the first predetermined voltage; wherein the primary side is center tapped at the center terminal.

In view of above-mentioned embodiments, the driving module and the driving method provided by the present application can reduce noise since the primary side is not coupled to a supply voltage, and can increase reliability since the driver can apply PMOS or PFETs. Additionally, the driving module and the driving method provided by the present application can generate output voltages for different requirements, since the second predetermined voltage can be adjusted.

In the following, the invention is further illustrated by way of example, taking reference to the accompanying drawings. Thereof
FIG.1 is a circuit diagram illustrating a related art transforming circuit;
FIG.2 is a circuit diagram illustrating a driving module according to related prior art useful for understanding the present invention, which is not an embodiment of the present invention;
FIG.3 is a circuit diagram illustrating an exemplary structure for the driving module depicted in FIG.2;
FIG.4 is a circuit diagram illustrating a driving module according to an embodiment of the present invention; and
FIG.5 is a flow chart illustrating a driving method according to related prior art useful for understanding the present invention, which is not an embodiment of the present invention.

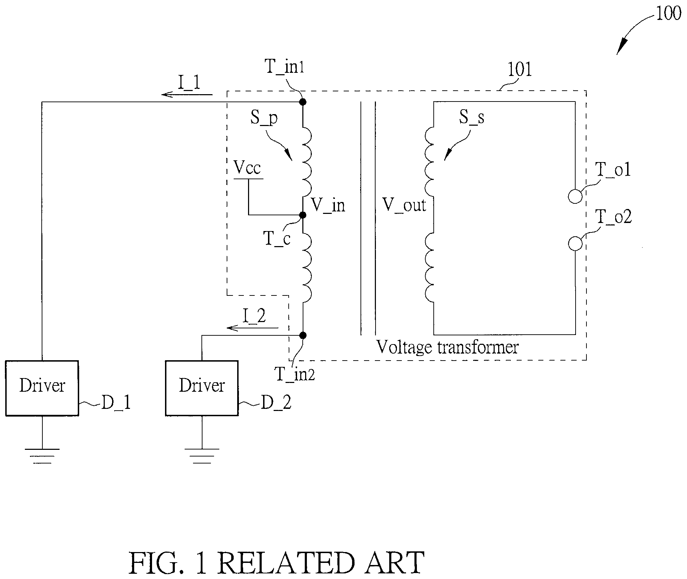

FIG.1 is a circuit diagram illustrating a related art driving module 100. As illustrated in FIG.1, the driving module 100 comprises a transformer 101 and drivers D_1, D_2. The transformer 101 comprises a primary side S_p and a secondary side S_s. The primary side S_p comprises input terminals T_in1, T_in2, and a center terminal T_c. The primary side S_p is center tapped at the center terminal T_c, and the center terminal T_c is coupled to a supply voltage Vcc.

The drivers D_1, D_2 are coupled to a ground voltage, which is lower than the supply voltage Vcc. Also, the drivers D_1, D_2 sink currents I_1, I_2 from the center terminal T_c. By
this way, an input voltage V_in can be generated via the primary side S_p based on the currents I_1, I_2. Then the secondary side S_s generates an output voltage V_out based on the input voltage V_in. A ratio of "input voltage V_in to output voltage V_out" depends on a ratio of "coil amount of the primary side S_p to coil amount of the secondary side S_s". Other details for the operations of the primary side S_p and the secondary side S_s are well known by persons skilled in the art, thus are omitted for brevity here.

The secondary side S_s comprises output terminals T_o1, T_o2, which can be coupled to any electronic apparatus, to provide the output voltage V_out to the electronic apparatus.

However, such structure has some defects. For example, if the driving module 100 is applied to electronic apparatuses following different operating modes but the supply voltage Vcc is fixed, the power is wasted if the electronic apparatus needs a signal amplitude (i.e. the output voltage V_out) lower than the Vcc, and the electronic apparatus may not smoothly operate if the electronic apparatus needs a signal amplitude higher than Vcc.

An electronic apparatus needs different operating modes because it may follow different standards, drive different length cable, or other possible reasons. Additionally, since the center terminal is coupled to the supply voltage Vcc, the noise from a source providing the supply voltage Vcc may affect the input voltage V_in, thus affects the output voltage V_out. Further, in the structure of FIG.1, the drivers D_1 and D_2 apply NMOSFETs to sink currents I_1, I_2. However, an NMOSFET have a low reliability, thus causes the low reliability of drivers D_1, D_2.

Therefore, a new driving module and a new driving method are needed to solve above-mentioned issues.

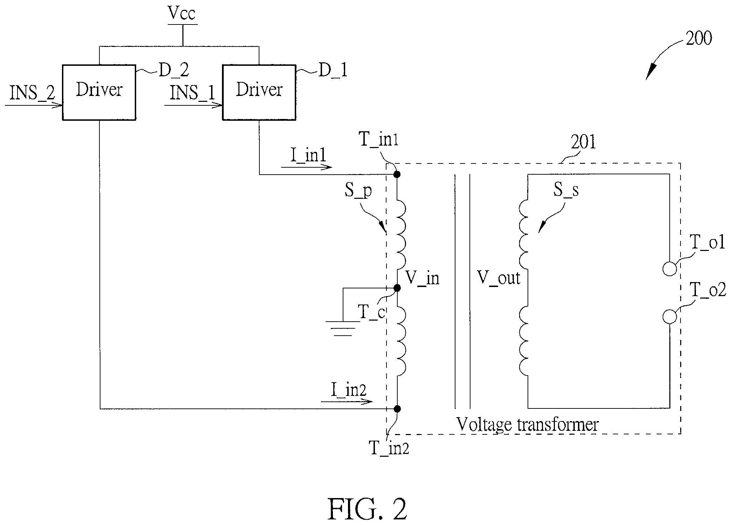

FIG.2 is a circuit diagram illustrating driving module according to related prior art useful for understanding the present invention, which is not an embodiment of the present invention. As illustrated in FIG.2, the driving module 200 comprises a transformer 201 and drivers D_1, D_2. The transformer 201 comprises a primary side S_p, and a secondary side S_s. Please note the drivers D_1, D_2 can be integrated to a single driver, or separated into more than two drivers. The primary side S_p comprises a first input terminal T_in1, a second input terminal T_in2, and a center terminal T_c. The center terminal T_c is coupled to a first predetermined voltage (in this embodiment, a ground voltage). The primary side S_p is center tapped at the center terminal T_c. Drivers D_1, D_2 are coupled to a second predetermined voltage (in this embodiment, a supply voltage Vcc higher than the ground voltage), configured to receive at least one input signal (in this embodiment, two input signals INS_1, INS_2), to provide a first input current I_in1 to the center terminal T_c, and to provide a second input current I_in2 to the center terminal T_c. The first input current I_in1 flows from the first input terminal T_in1 to the center terminal T_c, and the second input current I_in2 flows from the second input terminal T_in2 to the center terminal T_c. Also, please note the second predetermined voltage (Vcc in this embodiment) is higher than the first predetermined voltage (a ground voltage in this embodiment). The primary side S_p generates an input voltage V_in based on the first input current T_in1 and the second input current T_in2. The secondary side S_s generates an output voltage V_out based on the input voltage V_in. The values of the first input current I_in1 and the second input current I_in2 depend on the input signals INS_1, INS_2.

Comparing with the driving module described as related art, the noise of the driving module 200 can be suppressed since the primary side S_p is not directly coupled to the supply voltage Vcc. Also, the reliability of drivers D_1, D_2 can be increased since the drivers D_1, D_2 in the structure depicted in FIG.2 can apply a PMOS or a PFET to generate the first input current I_in1 and the second input current I_in2.

It will be appreciated that the secondary side S_s for the driving module 200 is not limited to have a structure illustrated in FIG.2. Also, the transformer 201 is not limited to be applied to drivers depicted in FIG.2.

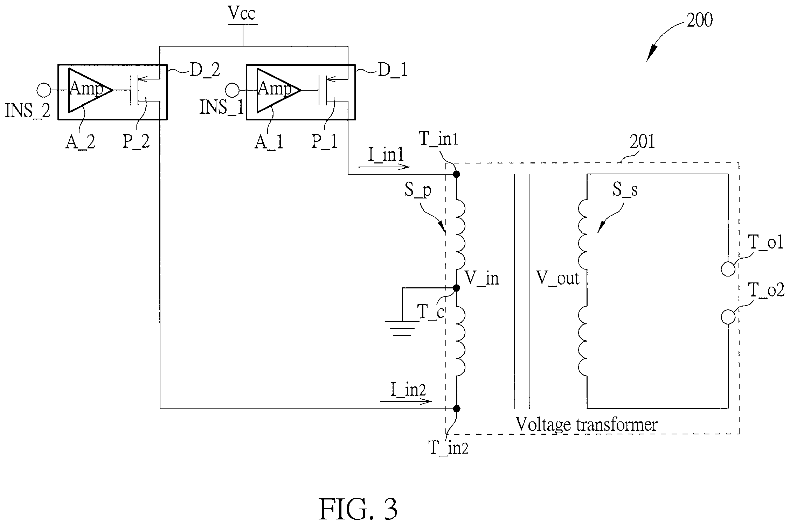

FIG.3 is a circuit diagram illustrating an exemplary structure for the driving module depicted in FIG.2. As illustrated in FIG.3, the driver D_1 comprises an amplifier A_1 and a PMOS P_1, and the driver D_2 comprises an amplifier A_2 and a PMOS P_2.PMOS P_1 In such example, the amplifier A_1 receives the input signal INS_1 and amplifies the input signal INS_1 to control the PMOS P_1. Similarly, the amplifier A_2 receives the input signal INS_2 and amplifies the input signal INS_2 to control the PMOS P_2. It will be appreciated that the structure of the drivers D_1, D_2 are not limited to the structure depicted in FIG.3. Please note the PMOS can be replaced with other kinds of P type transistors (ex. PFET).

Additionally, in one example, the driving module 200 is applied to an electronic apparatus using Ethernet. Accordingly, the output terminals T_o1, T_o2 of the secondary side S_s are coupled to a cable, but not limited.

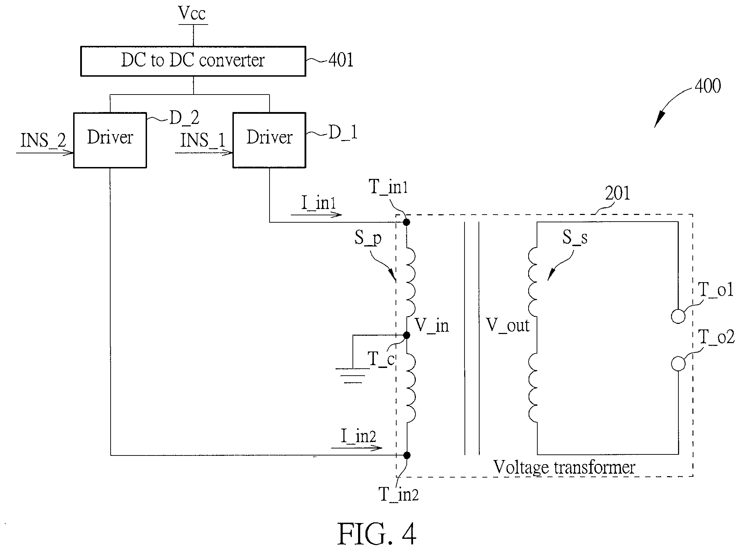

FIG.4 is a circuit diagram illustrating a driving module 400 according to an embodiment of the present invention. Comparing with the embodiment depicted in FIG.2, the driving module 400 in FIG.4 further comprises a DC-to-DC converter 401 coupled between the second predetermined voltage (Vcc in this embodiment) and drivers D_1, D_2. The DC-to-DC converter 401 can provide different supply voltages depends on the required signal voltage amplitude (i.e. the output voltage V_out), such that "output voltage of DC-to-DC converter" is slightly larger than required voltage amplitude. That is, the DC-to-DC converter converting the supply voltage Vcc depending on a swing of the output voltage V_out.

In view of above-mentioned description, the output voltage of the DC-to-DC converter can be adjusted corresponding different standards (i.e. different output signal swings). Thereby the output voltage of the DC-to-DC converter can be minimized, such that the power consumption caused by the output voltage of the DC-to-DC converter can be minimized as well.

Additionally, the swing of the output voltage V_out can be controlled to meet different requirements. In one embodiment, the driving module provided by the present invention is applied to an electronic apparatus using Ethernet, and a swing of the output voltage V_out meets a 10G Base-T standard. Furthermore, in another embodiment, the driving module provided by the present invention is applied to an electronic apparatus using Ethernet, and a swing of the output voltage V_out meets a 1000 Base-T standard.

The DC to DC converter 401 can be replaced by other devices that can provide a function the same as which of the DC to DC converter 401. Therefore, the DC to DC converter can be regarded as a voltage converting circuit.

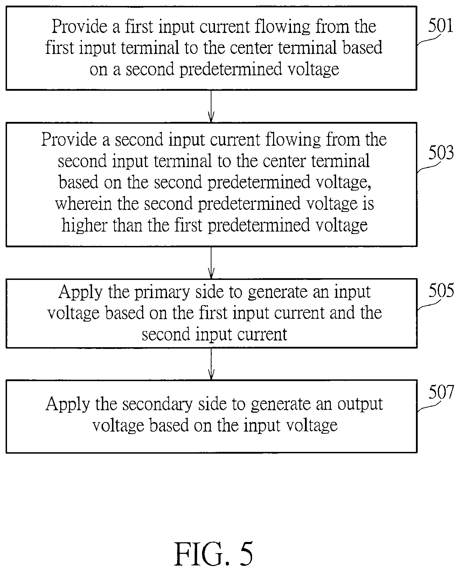

In view of above-mentioned embodiments, a driving method can be acquired, which is applied to a driving module comprising a transformer including a primary side (ex. S_p in FIG.2) and a secondary side (ex. S_s in FIG.2). The primary side comprises a first input terminal (ex. T_in1 in FIG.2), a second input terminal(ex. T_in2 in FIG.2), and a center terminal (ex. T_c in FIG.2)coupled to a first predetermined voltage. The primary side is center tapped at the center terminal. The driving method comprises the steps illustrated in FIG.5:

### Step 501

Provide a first input current (ex. I_in1 in FIG.2) flowing from the first input terminal to the center terminal based on a second predetermined voltage.

### Step 503

Provide a second input current (ex. I_in2 in FIG.2) flowing from the second input terminal to the center terminal based on the second predetermined voltage, wherein the second predetermined voltage is higher than the first predetermined voltage.

### Step 505

Apply the primary side to generate an input voltage (ex. V_in in FIG.2) based on the first input current and the second input current.

### Step 507

Apply the secondary side to generate an output voltage (ex. V_out) based on the input voltage.

Other detail steps can be acquired based on above-mentioned embodiments, thus are omitted for brevity here.

In view of above-mentioned embodiments, the driving module and the driving method provided by the present application can reduce noise since the primary side is not coupled to a supply voltage, and can increase reliability since the driver can apply a PMOS or a PFET. Additionally, the driving module and the driving method provided by the present application can suppress power consumption since the operating voltage of the driver can be minimized.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A driving module (400), comprising:
a transformer (201), comprising:
a primary side (S_p), comprising a first input terminal (T_in1), a second input terminal (T_in2), and a center terminal (T_c) coupled to a first predetermined voltage, wherein the primary side (S_p) is center tapped at the center terminal (T_c); and
a secondary side (S_s); and
at least one driver (D_1, D_2), coupled to a second predetermined voltage (V_cc), configured to receive at least one input signal (INS_1, INS_2), to provide a first input current (I_in1) flowing from the first input terminal (T_in1) to the center terminal (T_c) according to the input signal (INS_1, INS_2), and to provide a second input current (I_in2) flowing from the second input terminal (T_in2) to the center terminal according to the input signal (INS_1, INS_2);
wherein the primary side (S_p) generates an input voltage (V_in) based on the first input current (I_in1) and the second input current (I_in2), wherein the secondary side (S_s) generates an output voltage (V_out) based on the input voltage (V_in);
wherein the second predetermined voltage (V_cc) is higher than the first predetermined voltage;
**characterized in that** the driving module (400) further comprises:
a DC to DC voltage converting circuit, coupled between the second predetermined voltage (V_cc) and the driver (D_1; D_2), configured to convert the second predetermined voltage (V_cc) into a required converted voltage for generating a required voltage amplitude swing of the output voltage (V_out), wherein the DC to DC voltage converting circuit can convert the second predetermined voltage (V_cc) into different converted voltages for generating different voltage amplitude swings of the output voltage (V_out), respectively, and the required converted voltage is one of the different converted voltages.

2. The driving module (400) of claim 1, wherein the first predetermined voltage is a ground level.

3. The driving module (400) of claim 1, wherein the driver (D_1, D_2) comprises at least one P type transistor to provide the first input current (I_in1) and the second input current (I_in2).

4. The driving module (400) of claim 3, wherein the P type transistor is a PMOS or a PFET.

5. The driving module (400) of claim 1 wherein the voltage converting circuit is a DC to DC converter (401).

6. The driving module (400) of claim 1, wherein the voltage converting circuit is further configured to adjust the required converted voltage serving as an input voltage to the driver (D_1, D_2) such that a swing of the output voltage (V_out) meets a 10G Base-T standard.

7. The driving module (400) of claim 1, wherein the voltage converting circuit is further configured to adjust the required converted voltage serving as an input voltage to the driver (D-1, D-2) such that a swing of the output voltage (V_out) meets a 1000 Base-T standard.

8. A driving method, applied to a driving module (400) comprising a transformer (201) with a primary side (S_p) and a secondary side (S_s), wherein the primary side (S_p) comprises a first input terminal (T_in1), a second input terminal (T_in2), and a center terminal (T_c) coupled to a first predetermined voltage, wherein the primary side (S_p) is center tapped at the center terminal (T_c), wherein the driving method comprises:
providing a first input current (I_in1) flowing from the first input terminal (T_in1) to the center terminal (T_c) based on a second predetermined voltage (V_cc);
providing a second input current (I_in2) flowing from the second input terminal (T_in2) to the center terminal (T_c) based on the second predetermined voltage (V_cc), wherein the second predetermined voltage (V_cc) is higher than the first predetermined voltage;
applying the primary side (S_p) to generate an input voltage (V_in) based on the first input current I_in1) and the second input current (I_in2); and
applying the secondary side (S_s) to generate an output voltage (V_out) based on the input voltage;
**characterized by**:
converting, by a DC to DC voltage converting circuit, the second predetermined voltage (V_cc) into a required converted voltage for generating a required voltage amplitude swing of the output voltage (V_out), wherein the DC-to-DC voltage converting circuit can convert the second predetermined voltage (V_cc) into different converted voltages for generating different voltage amplitude swings of the output voltage (V_out), respectively, and the required converted voltage is one of the different converted voltages.

9. The driving method of claim 8, wherein the first predetermined voltage is a ground level.

10. The driving method of claim 8, wherein the method further comprises:
adjusting, by the DC to DC voltage converting circuit, the required converted voltage such that a swing of the output voltage (V_out) meets a 10G Base-T standard.

11. The driving method of claim 8, wherein the method further comprises:
adjusting, by the DC to DC voltage converting circuit, the required converted voltage such that a swing of the output voltage (V_out) meets a 1000 Base-T standard.

## Patentansprüche

1. Ein Treibermodul (400), umfassend:
einen Transformator (201), umfassend:
eine Primärseite (S_p), umfassend einen ersten Eingangsanschluss (T_in1), einen zweiten Eingangsanschluss (T_in2), und einen Mittelanschluss (T_c) verbunden mit einer ersten vordefinierten Spannung, wobei die Primärseite (S_p) mittig von dem Mittelanschluss (T_c) angezapft ist; und
eine Sekundärseite (S_s); und
mindestens einen Treiber (D_1, D_2), verbunden mit einer zweiten vordefinierten Spannung (V_cc), konfiguriert, um mindestens ein Eingangssignal (INS_1, INS_2) zu empfangen, um einen ersten Eingangsstrom (I_in1), welcher gemäß dem Eingangssignal (INS_1, INS_2) von dem ersten Eingangsanschluss (T_in1) zum Mittelanschluss (T_c) fließt, bereitzustellen, und um einen zweiten Eingangsstrom (I_in2), welcher gemäß dem Eingangssignal (INS_1, INS_2) von dem zweiten Eingangsanschluss (T_in2) zum Mittelanschluss (T_c) fließt, bereitzustellen;
wobei die Primärseite (S_p) basierend auf dem ersten Eingangsstrom (I_in1) und dem zweiten Eingangsstrom (I_in2) eine Eingangsspannung (V_in) generiert, wobei die Sekundärseite (S_s) basierend auf der Eingangsspannung (V_in) eine Ausgangsspannung (V_out) generiert;
wobei die zweite vordefinierte Spannung (V_cc) größer ist als die erste vordefinierte Spannung (V_cc);
**dadurch gekennzeichnet, dass** das Treibermodul (400) weiter umfasst:
eine DC-DC Spannungswandlerschaltung, verbunden zwischen der zweiten vordefinierten Spannung (V_cc) und dem Treiber (D_1; D_2), eingerichtet, um die zweite vordefinierte Spannung (V_cc) in eine benötigte gewandelte Spannung zur Erzeugung eines benötigten Spannungsamplitudenhubs der Ausgangsspannung (V_out) zu wandeln, wobei die DC-DC Spannungswandlerschaltung die zweite vordefinierte Spannung (V_cc) in verschiedene gewandelte Spannungen zur Erzeugung entsprechender unterschiedlicher Spannungsamplitudenhübe der Ausgangsspannung (V_out) umwandeln kann, und die erforderliche gewandelte Spannung eine der verschiedenen gewandelten Spannungen ist.

2. Treibermodul (400) nach Anspruch 1, wobei die erste vordefinierte Spannung ein Massepegel ist.

3. Treibermodul (400) nach Anspruch 1, wobei der Treiber (D_1, D_2) mindestens einen P-Transistor zur Bereitstellung des ersten Eingangsstroms (I_in1) und des zweiten Eingangsstroms (I_in2) umfasst.

4. Treibermodul (400) nach Anspruch 3, wobei der P-Transistor ein PMOS oder ein PFET ist.

5. Treibermodul (400) nach Anspruch 1, wobei die Spannungswandlerschaltung ein DC-DC Wandler (401) ist.

6. Treibermodul (400) nach Anspruch 1, wobei die Spannungswandlerschaltung des Weiteren eingerichtet ist, die als Eingangsspannung für den Treiber (D_1, D_2) dienende benötigte gewandelte Spannung so anzupassen, dass ein Hub der Ausgangsspannung (V_out) einem 10G Base-T Standard entspricht.

7. Treibermodul (400) nach Anspruch 1, wobei die Spannungswandlerschaltung des Weiteren eingerichtet ist, die als Eingangsspannung für den Treiber (D_1, D_2) dienende benötigte gewandelte Spannung so anzupassen, dass ein Hub der Ausgangsspannung (V_out) einem 1000 Base-T Standard entspricht.

8. Steuerungsverfahren, das auf ein Treibermodul (400) angewendet wird, welches einen Transformator (201) mit einer Primärseite (S_p) und einer Sekundärseite (S_s) umfasst, wobei die Primärseite (S_p) einen ersten Eingangsanschluss (T_in1), einen zweiten Eingangsanschluss (T_in2) und einen Mittelanschluss (T_c) verbunden mit einer ersten vordefinierten Spannung umfasst, wobei die Primärseite (S_p) mittig von dem Mittelanschluss (T_c) angezapft ist, wobei das Steuerungsverfahren umfasst:
Bereitstellen eines ersten Eingangsstroms (I_in1), welcher basierend auf einer zweiten vordefinierten Spannung (V_cc) von dem ersten Eingangsanschluss (T_in1) zu dem Mittelanschluss fließt;
Bereitstellen eines zweiten Eingangsstroms (I_in2), der basierend auf der zweiten vordefinierten Spannung (V_cc) von dem zweiten Eingangsanschluss (T_in2) zu dem Mittelanschluss (T_c) fließt, wobei die zweite vordefinierte Spannung (V_cc) größer ist als die erste vordefinierte Spannung;
Verwenden der Primärseite (S_p) zum Erzeugen einer Eingangsspannung (V_in) basierend auf dem ersten Eingangsstrom (i_in1) und dem zweiten Eingangsstrom (I_in2); und
Verwenden der Sekundärseite (S_s) zum Erzeugen einer Ausgangsspannung (V_out) basierend auf der Eingangsspannung;
**gekennzeichnet durch**:
Wandeln der zweiten vordefinierten Spannung (V_cc) durch eine DC-DC Spannungswandlerschaltung in eine benötigte gewandelte Spannung zur Erzeugung eines benötigten Spannungsamplitudenhubs der Ausgangsspannung (V_out), wobei die DC-DC Spannungswandlerschaltung die zweite vordefinierte Spannung (V_cc) in verschiedene gewandelte Spannungen zur Erzeugung entsprechender unterschiedlicher Spannungsamplitudenhübe der Ausgangsspannung (V_out) umwandeln kann, und die erforderliche gewandelte Spannung eine der verschiedenen gewandelten Spannungen ist.

9. Steuerungsverfahren oder Anspruch 8, wobei die erste vordefinierte Spannung ein Massepegel ist.

10. Steuerungsverfahren nach Anspruch 8, wobei das Verfahren weiter umfasst:
Anpassen der benötigten gewandelten Spannung durch die DC-DC Spannungswandlerschaltung so, dass ein Hub der Ausgangsspannung (V_out) einem 10G Base-T Standard entspricht.

11. Steuerungsverfahren nach Anspruch 8, wobei das Verfahren weiter umfasst:
Anpassen der benötigten gewandelten Spannung durch die DC-DC Spannungswandlerschaltung so, dass ein Hub der Ausgangsspannung (V_out) einem 1000 Base-T Standard entspricht.

## Revendications

1. Module d'attaque (400), comprenant :
un transformateur (201), comprenant :
un côté primaire (S_p), comprenant une première borne d'entrée (T_in1), une deuxième borne d'entrée (T_in2) et une borne centrale (T_c) couplée à une première tension prédéterminée, dans lequel le côté primaire (S_p) est à prise centrale au niveau de la borne centrale (T_c) ; et
un côté secondaire (S_s) ; et
au moins un pilote (D_1, D_2), couplé à une deuxième tension prédéterminée (V_cc), configuré pour recevoir au moins un signal d'entrée (INS_1, INS_2), pour fournir un premier courant d'entrée (I_in1) circulant de la première borne d'entrée (T_in1) à la borne centrale (T_c) en fonction du signal d'entrée (INS_1, INS_2), et pour fournir un deuxième courant d'entrée (I_in2) circulant de la deuxième borne d'entrée (T_in2) à la borne centrale en fonction du signal d'entrée (INS_1, INS_2) ;
dans lequel le côté primaire (S_p) génère une tension d'entrée (V_in) sur la base du premier courant d'entrée (I_in1) et du deuxième courant d'entrée (I_in2), dans lequel le côté secondaire (S_s) génère une tension de sortie (V_out) sur la base de la tension d'entrée (V_in) ;
dans lequel la deuxième tension prédéterminée (V_cc) est supérieure à la première tension prédéterminée ;
**caractérisé en ce que** le module d'attaque (400) comprend en outre :
un circuit de conversion de tension CC-CC, couplé entre la deuxième tension prédéterminée (V_cc) et le pilote (D_1 ; D_2), configuré pour convertir la deuxième tension prédéterminée (V_cc) en une tension convertie requise pour générer une élongation maximale d'amplitude de tension requise de la tension de sortie (V_out), dans lequel le circuit de conversion de tension CC-CC peut convertir la deuxième tension prédéterminée (V_cc) en différentes tensions converties pour générer différentes élongations maximales d'amplitude de tension de la tension de sortie (V_out), respectivement, et la tension convertie requise est l'une des différentes tensions converties.

2. Module d'attaque (400) de la revendication 1, dans lequel la première tension prédéterminée est un niveau de masse.

3. Module d'attaque (400) de la revendication 1, dans lequel le pilote (D_1, D_2) comprend au moins un transistor de type P pour fournir le premier courant d'entrée (I_in1) et le deuxième courant d'entrée (I_in2).

4. Module d'attaque (400) de la revendication 3, dans lequel le transistor de type P est un PMOS ou un PFET.

5. Module d'attaque (400) de la revendication 1, dans lequel le circuit de conversion de tension est un convertisseur CC-CC (401).

6. Module d'attaque (400) de la revendication 1, dans lequel le circuit de conversion de tension est en outre configuré pour régler la tension convertie requise servant de tension d'entrée au pilote (D_1, D_2) de sorte qu'une excursion de la tension de sortie (V_out) réponde à la norme 10G Base-T.

7. Module d'attaque (400) de la revendication 1, dans lequel le circuit de conversion de tension est en outre configuré pour régler la tension convertie requise servant de tension d'entrée au pilote (D-1, D-2) de sorte qu'une excursion de la tension de sortie (V_out) réponde à la norme 1000 Base-T.

8. Procédé d'attaque, appliqué à un module d'attaque (400) comprenant un transformateur (201) avec un côté primaire (S_p) et un côté secondaire (S_s), dans lequel le côté primaire (S_p) comprend une première borne d'entrée (T_in1), une deuxième borne d'entrée (T_in2) et une borne centrale (T_c) couplée à une première tension prédéterminée, où le côté primaire (S_p) est à prise centrale au niveau de la borne centrale (T_c), dans lequel le procédé d'attaque comprend le fait :
de fournir un premier courant d'entrée (I_in1) circulant de la première borne d'entrée (T_in1) à la borne centrale (T_c) sur la base d'une deuxième tension prédéterminée (V_cc) ;
de fournir un deuxième courant d'entrée (I_in2) circulant de la deuxième borne d'entrée (T_in2) à la borne centrale (T_c) sur la base de la deuxième tension prédéterminée (V_cc), où la deuxième tension prédéterminée (V_cc) est supérieure à la première tension prédéterminée ;
d'appliquer le côté primaire (S_p) pour générer une tension d'entrée (V_in) sur la base du premier courant d'entrée (I_in1) et du deuxième courant d'entrée (I_in2) ; et
d'appliquer le côté secondaire (S_s) pour générer une tension de sortie (V_out) sur la base de la tension d'entrée ;
**caractérisé par** le fait :
de convertir, par un circuit de conversion de tension CC-CC, la deuxième tension prédéterminée (V_cc) en une tension convertie requise pour générer une élongation maximale d'amplitude de tension requise de la tension de sortie (V_out), dans lequel le circuit de conversion de tension CC-CC peut convertir la deuxième tension prédéterminée (V_cc) en différentes tensions converties pour générer différentes élongations maximales d'amplitude de tension de la tension de sortie (V_out), respectivement, et la tension convertie requise est l'une des différentes tensions converties.

9. Procédé d'attaque de la revendication 8, dans lequel la première tension prédéterminée est un niveau de masse.

10. Procédé d'attaque de la revendication 8, dans lequel le procédé comprend en outre le fait :
de régler, par le circuit de conversion de tension CC-CC, la tension convertie requise de sorte qu'une excursion de la tension de sortie (V_out) réponde à la norme 10G Base-T.

11. Procédé d'attaque de la revendication 8, dans lequel le procédé comprend en outre le fait :
de régler, par le circuit de conversion de tension CC-CC, la tension convertie requise de sorte qu'une excursion de la tension de sortie (V_out) réponde à la norme 1000 Base-T.
